# EUROPÄISCHE PATENTSCHRIFT

(11) **EP 3 837 513 B1**
(45) Veröffentlichungstag und Bekanntmachung des Hinweises auf die Patenterteilung: **01.04.2026**
(21) Anmeldenummer: 19762092.5
(22) Anmeldetag: 09.08.2019
(51) Int. Cl.: G01J 3/02, G01J 3/10, G01J 3/52, G01J 1/08

(54) **VERFAHREN UND VORRICHTUNG ZUR ÜBERWACHUNG EINES SPEKTRALRADIOMETERS**
METHOD AND APPARATUS FOR MONITORING A SPECTRAL RADIOMETER
PROCÉDÉ ET DISPOSITIF DE CONTRÔLE D'UN RADIOMÈTRE SPECTRAL

(30) Priorität: 16.08.2018 DE 102018120006
(43) Veröffentlichungstag der Anmeldung: 23.06.2021
(73) Patentinhaber: Instrument Systems GmbH, 81677 München (DE)
(72) Erfinder: HÖH, Mathias, 80636 München (DE); HÄRING, Reto, 81369 München (DE); SCHEWE, Florian, 80639 München (DE); MANGSTL, Martin, 81737 München (DE); KOPP, Thorsten, 85579 Neubiberg (DE)
(74) Vertreter: Schneiders & Behrendt Bochum
(86) Internationale Anmeldenummer: PCT/EP2019/071479
(87) Internationale Veröffentlichungsnummer: WO 2020/035418

(56) Entgegenhaltungen:
- CN-A- 101 354 287
- US-A- 4 708 477
- US-A1- 2006 132 760
- US-A1- 2013 320 855
- US-A1- 2015 316 411
- US-B1- 6 583 879

## Beschreibung

Die Erfindung betrifft ein Verfahren zur Überwachung eines Spektralradiometers, bei dem mittels eines optischen Systems die Spektraldaten von z.B. lichtaussendenden Testobjekten erfasst werden. Aus den Spektraldaten können radio-, photo- und/oder farbmetrische Größen der Testobjekte ermittelt werden.

Außerdem betrifft die Erfindung eine Vorrichtung zur Durchführung des Verfahrens.

Viele Aufgaben in der Lichtmesstechnik, in den sichtbaren und nicht sichtbaren Bereichen des elektromagnetischen Spektrums, werden in der Praxis mittels Spektrometern durchgeführt, um nicht nur, wie zum Beispiel bei einfachen Photodioden-Detektoren, einen Leistungswert, sondern eine nach Wellenlängen aufgelöste Leistungsverteilung (Spektrum) zu erfassen.

Beispielsweise werden derartige Spektrometer bei der Vermessung von lichtaussendenden Testobjekten (beispielsweise in der Produktion von LEDs) eingesetzt. Mittels eines optischen Messsystems werden die Spektraldaten der Testobjekte erfasst. Aus diesen Spektraldaten können dann die radio-, photo- und/oder farbmetrischen Größen der Testobjekte ermittelt werden.

Ein Problem beim Einsatz von Spektralradiometern ist, dass sie wegen ihrer komplexeren Optik gegenüber anderen, einfacheren Detektoren schneller in ihrer Empfindlichkeit variieren können. Für ein kalibriertes Messsystem bedeutet das, dass es nach einer gewissen Zeit außerhalb der Spezifikationen messen würde.

Die wichtigsten Einflussgrößen, die für eine ungültige Kalibrierung ("Dekalibrierung") verantwortlich sind, sind die Temperatur und die Veränderung über Alterung. Die relevanten Veränderungen lassen sich in drei Kategorien einteilen: Veränderungen in der Wellenlängenskala, Änderungen des Lichtdurchsatzes und Änderungen der spektralen Empfindlichkeit, zum Beispiel ein Absinken der Blauempfindlichkeit relativ zur Rotempfindlichkeit.

Aus dem Stand der Technik ist es bekannt, zur Kalibrierung regelmäßig eine Referenzlichtquelle, so genannte "LED-Standards" mit bekannten spektralen Eigenschaften mit dem Spektralradiometer zu vermessen. Im Laborbetrieb wird in der Regel vor einer Messung oder auch zum Beispiel täglich eine Standard-LED vermessen, und ein Vergleich der Messergebnisse mit den bekannten Referenzwerten der LED durchgeführt, um sicherzustellen, dass das Spektralradiometer richtig misst. In Fertigungslinien, wie beispielhaft oben angeführt, werden zum Beispiel wöchentlich mit einem LED-Standard die Messgeräte einer Produktionslinie abgeglichen, um gegebenenfalls Spektralradiometer außerhalb der Spezifikation aus der Linie nehmen zu können. Ein weiterer bekannter Ansatz ist die so genannte "Golden Sample"-Methode, bei der ein zu den Messobjekten baugleiches Teil in einem Qualitätslabor vermessen und mit Referenzwerten versehen wird. In der Fertigungslinie wird das zu den Messobjekten baugleiche Teil vermessen, und die Auslesewerte werden entsprechend den Referenzwerten korrigiert. Es können mehrere derartige baugleiche Teile verwendet werden, um eine Mittelung zu erhalten.

Darüber hinaus ist es bekannt (vgl. CN 101 784 428), dass ein zweites unabhängiges Messsystem eingebaut wird, zum Beispiel eine Photodiode in ein Spektralradiometer. Dadurch ist eine Selbstdiagnose der integralen Empfindlichkeiten möglich. Hierdurch ist aber keine Diagnose in Bezug auf spektrale Fehler möglich (zum Beispiel Wellenlängenverschiebung oder spektralabhängige Empfindlichkeitsänderungen).

US 2013/0320855 A1 offenbart ein Integrationskugel-Messsystem mit einer zusätzlichen Festkörper-Hilfslichtquelle (SSAL) zur Kalibrierung und Selbstabsorptionskorrektur.

CN 101354287 B beschreibt ein Spektrometer, dessen Empfindlichkeit und Kalibrierung mithilfe einer internen Referenzlichtquelle und gegebenenfalls eines Referenzdetektors überwacht und korrigiert werden.

US 4,708,477 A offenbart ein Photometersystem mit zwei Detektoren und einer Referenzlichtquelle, bei dem Driften und Nichtlinearitäten des empfindlichen Detektors durch Vergleich mit einem stabileren Referenzdetektor kompensiert werden.

US 2015/0316411 A1 beschreibt ein Messsystem mit einer Ulbrichtkugel, in der lichtemittierende Prüflinge und ein Kalibrierstandard angeordnet sind, deren Licht mit einem Spektralradiometer gemessen wird. Eine Kamera dient dabei lediglich zur Ausrichtung des Prüflings vor der Öffnung der Ulbrichtkugel.

US 6,583,879 B1 offenbart ein Farbmesssystem für reflektierende Proben, um das von der Probe reflektierte Licht zu erfassen. Ein zusätzlicher Referenzspektrograph überwacht die Beleuchtung der Probe.

Der Erfindung liegt die Aufgabe zugrunde, ein Verfahren zur Überwachung eines Spektralradiometers anzugeben, bei dem nicht die laufende Nachkalibrierung des Spektrometers im Vordergrund steht, sondern die Überwachung, wann eine Kalibrierung erforderlich wird.

Die gestellte Aufgabe wird durch ein Verfahren gemäß Anspruch 1 und eine Vorrichtung nach Anspruch 6 gelöst. Hierbei wird das Licht eines lichtaussendenden Testobjekts durch ein optisches System als Aufnahmeoptik empfangen, das einen Messkopf umfasst, welcher über eine optische Faser mit dem Spektralradiometer verbunden ist. Der Messkopf enthält ein Objektiv und einen integrierten CCD-Bildsensor, wobei ein Strahlteiler einen Teil des vom Testobjekt kommenden Lichts über die optische Verbindung dem Spektralradiometer zuführt und einen Teil zum CCD-Bildsensor. Erfindungsgemäß ist eine Referenzlichtquelle mit bekanntem Referenzspektrum in den Messkopf integriert. Mittels dieser Referenzlichtquelle wird eine Überwachung der Kalibrierung des Spektralradiometers durchgeführt, indem anhand des bekannten Referenzspektrums Veränderungen in der Wellenlängenskala, im Lichtdurchsatz und/oder in der spektralen Empfindlichkeit detektiert werden.

Durch die Integration der Referenzlichtquelle mit bekanntem Spektrum (beispielsweise eine LED) in das optische System, kann eine Abweichung der Kalibrierung des Messgerätes und damit deren Gültigkeit festgestellt werden. Veränderungen im Referenzspektrum können zum Beispiel dadurch detektiert werden, dass zu einem Referenzzeitpunkt, zu dem die Gültigkeit der Kalibrierung feststeht (z.B. nach Neukalibrierung), ein Spektrum der Referenzlichtquelle aufgenommen und abgespeichert wird. Im folgenden Verlauf des Gebrauchs der Spektralradiometers werden Abweichungen gegenüber dem abgespeicherten Spektrums ermittelt.

Durch den Einsatz der integrierten Referenzlichtquelle verringern sich der technische und der zeitliche Aufwand bei der (bisher manuellen) Überprüfung einer Kalibrierung eines Messsystems. Dadurch werden die Stillstandzeiten einer Produktionsstraße verringert und die Produktivität erhöht. Darüber hinaus werden menschliche Fehler bei der Durchführung der Überprüfung vermieden.

Wie oben bereits ausgeführt, soll das Verfahren in Produktionsstraßen angewendet werden, in denen Messsysteme zur Qualitätssicherung heute bereits existieren und bei denen die beschriebene manuelle Überprüfung dieser Systeme durchgeführt wird. Das betrifft zum Beispiel in der Produktion von LEDs den so genannten LED-Handler, der die LEDs einer Qualitätsprüfung unterzieht und in unterschiedliche Bins sortiert. Ein weiteres Beispiel ist die Produktion von Displays (zum Beispiel für Mobiltelefone), bei der das Messsystem eingesetzt wird, um die Displays abzugleichen (zum Beispiel Abgleich der Gamma-Kurve, der Gamutbestimmung usw.). Denkbar ist aber auch ein Einsatz in anderen Messsystemen, bei denen die Notwendigkeit der Einhaltung enger Spezifikationen besteht. Insbesondere in Umgebungen mit Umwelteinflüssen wie Temperaturschwankungen.

Als Einkoppeloptiken im optischen System werden vorteilhafterweise ein Messkopf für Lichtstrom (eine Ulbricht-Kugel), ein Leuchtdichtemesskopf (Teleskopoptik) oder aber auch ein Bestrahlungsstärkemesskopf (Cosinus-Empfänger) eingesetzt.

Als Referenzlichtquelle wird vorteilhafterweise eine temperaturstabilisierte LED verwendet. Die LED kann mit einem Konstantstrom betrieben werden, so dass sie sich nach einer gewissen Zeit in einem thermodynamischen Gleichgewicht befindet. Das Spektrum wird, dann in diesem stabilen Zustande erfasst. Oder die Referenzlichtquelle (LED) wird mit kurzen Lichtblitzen (d.h. gepulst) betrieben, um zwar keinen stabilen aber doch einen reproduzierbaren thermischen Zustand der LED sicherzustellen.

Vorteilhafterweise wird die Referenzlichtquelle möglichst dort in das Messsystem integriert, wo die Lichtaufnahme des Testobjektes normalerweise erfolgt, so dass der optische Pfad der Referenzlichtquelle und der Messobjekte möglichst ähnlich ist. Beispielsweise, wenn die Aufnahmeoptik eine Ulbricht-Kugel umfasst, die über eine Faser mit dem Spektralradiometer gekoppelt ist, wird die Referenzlichtquelle vorzugsweise ebenfalls in die Ulbricht-Kugel eingebaut.

Vorteilhafter Weise wird als Referenzlichtquelle eine weiße LED eingesetzt, die die Möglichkeit bietet, die drei typischen relevanten Veränderungen einzeln zu detektieren:
- Über den Blau-Peak des Spektrums lässt sich die Wellenlängenskala überprüfen;
- über die Änderung der Signalhöhe lässt sich der Lichtdurchsatz überprüfen;
- über die Spektralform lässt sich eine Veränderung der spektralen Empfindlichkeit überprüfen.

Im Folgenden wir die Erfindung anhand der Zeichnungen näher erläutert.

Es zeigen:
- Figur 1:: Ansicht einer nicht erfindungsgemäßen Vorrichtung in einer ersten Ausführungsform;
- Figur 2:: Darstellung eines Verfahrens als Flussdiagramm;
- Figur 3:: Spektrum einer als Referenzlichtquelle 5 verwendeten weißen LED;
- Figur 4:: Vergleich von Referenzspektrum und gemessenem Spektrum;
- Figur 5:: Ansicht einer erfindungsgemäßen Vorrichtung in einer Ausführungsform.

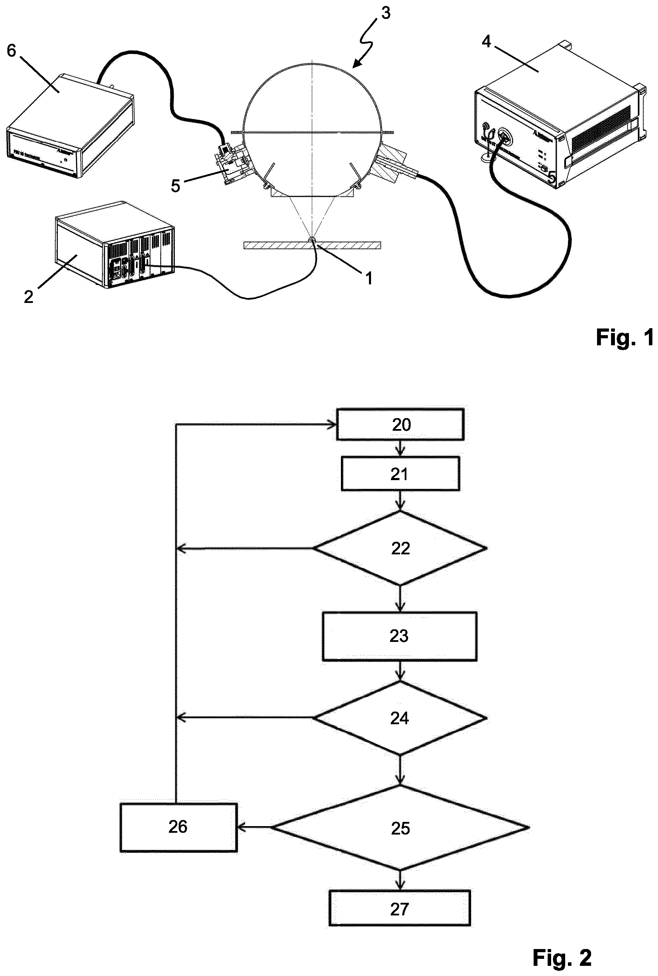

Die Figur 1 zeigt eine nicht erfindungsgemäße Vorrichtung. Ein Testobjekt 1, bei dem es sich zum Beispiel um eine zum Zwecke der Qualitätssicherung zu vermessende LED handelt, wird mittels einer Stromquelle 2 betrieben. Das emittierte Licht der LED 1 wird von einem optischen System als Aufnahmeoptik empfangen, das einen Messkopf 3 eines Spektralradiometers 4 umfasst, wobei der Messkopf 3 über eine optische Faser mit dem Spektralradiometer 4 verbunden ist. Die Aufnahmeoptik umfasst außerdem eine Referenzlichtquelle 5, die über eine steuerbare Präzisionsstromquelle 6 angesteuert und mit elektrischer Energie versorgt wird. Bei der Referenzlichtquelle 5 handelt es sich zum Beispiel um eine weiße LED mit bekannten spektralen Eigenschaften, deren Licht ebenfalls von dem Messkopf 3 des Spektralradiometers 4 empfangen wird. Der Messkopf 4 umfasst bei der Ausführungsform der Figur 1 eine Ulbricht-Kugel, um das von der LED 1 emittierte Licht und das Licht der Referenzlichtquelle 5 zu erfassen und über die verschiedenen Emissionsrichtungen zu integrieren. Dabei ist die Referenzlichtquelle 5 in die Ulbricht-Kugel integriert, d.h. fest eingebaut. Neben dem Messkopf 3 ist ein hoch stabiler Fotodetektor (nicht dargestellt) in das optische System integriert, der die Stabilität der Emission der Referenzlichtquelle 5 überwacht. Des Weiteren umfasst die Vorrichtung ein Computersystem (nicht dargestellt), das mit dem Spektralradiometer 4 kommuniziert, um die jeweilige Messung zu starten, Korrekturparameter vorzugeben und die erfassten Messdaten auszulesen. Außerdem empfängt das Computersystem die Betriebsdaten der Präzisionsstromquelle 6 der Referenzlichtquelle 5 sowie die Messdaten des hoch stabilen Fotodetektors. Wesentlich ist, dass die Referenzlichtquelle 5 in das als Aufnahmeoptik der Vorrichtung fungierende optische System integriert ist, um eine Abweichung der Kalibrierung des Spektralradiometers 4 jederzeit feststellen zu können. Das Licht des Testobjekts 1 sowie auch das Licht der Referenzlichtquelle 5 werden also mit derselben Messanordnung aus Spektralradiometer 4 und Messkopf 3 vermessen. Die beiden Spektraldatensätze, d.h. das bekannte Spektrum der Referenzlichtquelle 5 und die entsprechenden Messdaten des Spektralradiometers 4, werden in dem Computersystem verglichen, um die Gültigkeit der Kalibrierung zu überprüfen. Wenn die Differenz zwischen den gemessenen Daten und den hinterlegten Kalibrierdaten der Referenzlichtquelle 5 klein genug ist, d.h. unterhalb einer vorgegebenen Schwelle liegt, ist es möglich, eine entsprechende Justierung/Korrektur der von dem Testobjekt 1 erfassten Messdaten mittels des Computersystems durchzuführen. Parallel zu diesem Prozess erfolgt eine Überwachung der Referenzlichtquelle 5 mittels des hoch stabilen Fotodetektors, dessen Messdaten ebenfalls an das Computersystem übertragen werden, um insgesamt eine höchst zuverlässige Messung zu ermöglichen. Sobald über den hoch stabilen Fotodetektor eine Abweichung in der Lichtemission der Referenzlichtquelle 5 festgestellt wird, deutet dies darauf hin, dass die im Computersystem hinterlegten Kalibrierdaten der Referenzlichtquelle 5 (z.B. aufgrund einer Alterung der Referenzlichtquelle 5) nicht mehr gültig sind, sodass eine vollständige Rekalibrierung des Systems und ggf. ein Austausch der Referenzlichtquelle 5 erforderlich sind.

Die Figur 2 illustriert in Verfahren zur Überwachung des eines Spektralradiometers. In Schritt 20 wird das jeweils nächste zu vermessende Testobjekt 1 für die Messung bereitgestellt, zum Beispiel indem es in der vorgesehenen Art und Weise zum Messkopf 3 des Spektralradiometers 4 positioniert wird. Im Schritt 21 wird dann die Messung der radio-, photo- und/oder farbmetrischen Größen des Testobjekts 1 mittels des Spektralradiometers 4 durchgeführt. Hierzu steuert das Computersystem das Spektralradiometer 4 geeignet an. In Schritt 22 wird abgefragt, ob eine Überprüfung der Kalibrierung des Spektralradiometers 4 erforderlich ist. Dies kann zum Beispiel nach einer bestimmten vorgegebenen Anzahl von Messungen der Fall sein. Ist die Überprüfung nicht erforderlich, verzweigt der Ablauf zurück zum Schritt 20 und es erfolgt die Zuführung und Vermessung des nächsten Testobjekts 1. Ergibt die Abfrage, dass die Kalibrierung überprüft werden soll, so wird im Schritt 23 mittels der Präzisionsstromquelle 6 die Referenzlichtquelle 5 aktiviert und deren Licht über den Messkopf 3 mittels des Spektralradiometers 4 vermessen. In Schritt 24 wird dann abgefragt, ob die Abweichung der von der Referenzlichtquelle 5 im Schritt 23 erfassten Messdaten von vorab im Computersystem hinterlegten Daten des Referenzspektrums der Referenzlichtquelle 5 unterhalb oder oberhalb einer vorgegebenen Schwelle liegt. Liegt die Abweichung unterhalb der Schwelle, verzweigt das Verfahren wiederum zurück zu Schritt 20 und es erfolgt die Positionierung und Vermessung des nächsten Testobjektes 1. Liegt die Abweichung von den Kalibrierdaten oberhalb der Schwelle, wird in Schritt 25 abgefragt, ob die Abweichung noch klein genug ist, um eine entsprechende Korrektur auf die von den Testobjekten jeweils erfassten Messdaten anzuwenden. Ist dies der Fall, erfolgt im Schritt 26 die Ableitung entsprechender Korrekturparameter aus dem Vergleich der von der Referenzlichtquelle 5 mittels des Spektralradiometers 4 erfassten Messdaten mit dem hinterlegten Referenzspektrum der Referenzlichtquelle 5. Diese Korrekturdaten werden dann in nachfolgenden Messvorgängen auf die von den Testobjekten 1 erfassten Messdaten angewendet, um die festgestellten Abweichungen entsprechend zu kompensieren. Ist die festgestellte Abweichung zu groß, erfolgt im Schritt 27 eine vollständige Rekalibrierung des Systems.

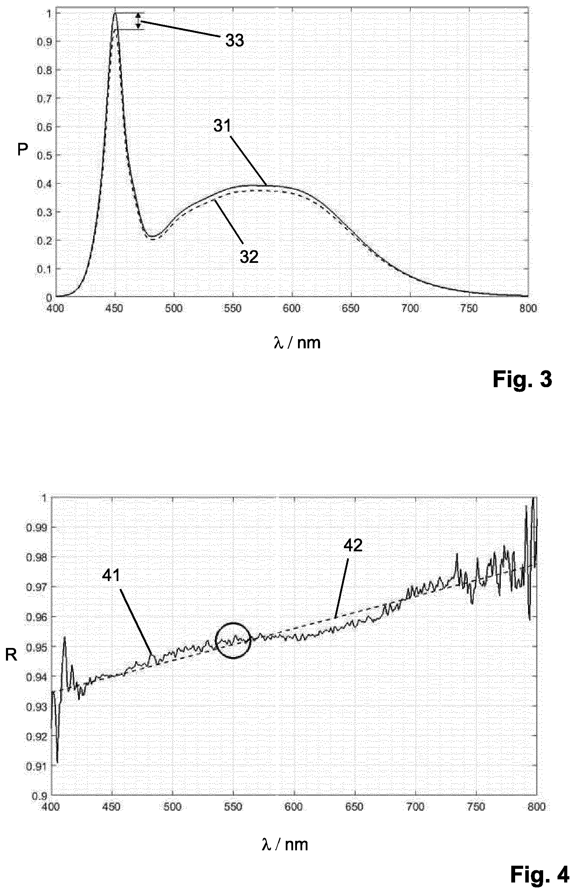

Die Figur 3 zeigt das Spektrum einer als Referenzlichtquelle 5 verwendeten weißen LED mit den charakteristischen Maxima im blauen und gelben Spektralbereich. Dargestellt ist eine durchgezogene Kurve 31, die das bekannte und im Computersystem hinterlegte Spektrum der Referenzlichtquelle 5 wiedergibt. Die gestrichelte Kurve 32 ist das über den Messkopf 3 mittels des Spektralradiometers 4 im Schritt 23 gemessene Leistungsspektrum der Referenzlichtquelle 5. Die beiden Kurven 31, 32 weichen erkennbar voneinander ab. Im Bereich des Peaks bei 450 nm weicht die gemessene Leistung deutlich von der tatsächlichen Leistung ab. Dies ist durch den Doppelpfeil 33 angedeutet.

Die Figur 4 zeigt entsprechend das Verhältnis der Kurven 32 und 31 der Figur 3 als Kurve 41. Zu erkennen ist, dass das Verhältnis über den gesamten sichtbaren Spektralbereich deutlich unterhalb von 1,0 (ideale Übereinstimmung) liegt. Bei 550 nm zum Beispiel (dargestellt durch den Kreis) liegt die Abweichung bei ca. 5 %. Die gestrichelte Gerade 42 ergibt sich durch eine lineare Regression der Kurve 41. Die Kurve 42 kann in Schritt 26 (Figur 2) abgeleitet werden, um in nachfolgenden Messschritten zur entsprechenden Korrektur der erfassten Messdaten verwendet zu werden.

Wie die obigen Ausführungen zeigen, hat das erfindungsgemäße Verfahren gegenüber dem Stand der Technik den Vorteil, dass eine Überwachung der Kalibrierung des Spektralradiometers 4 mittels der Referenzlichtquelle 5 in kurzen Zeitabständen mit minimalem Aufwand durchgeführt werden kann, sodass die Qualität und Zuverlässigkeit der Messergebnisse verbessert wird. Der Zeitaufwand für die Überprüfung mittels der in die Aufnahmeoptik integrierten Referenzlichtquelle 5 dauert nur wenige Sekunden. Bei geringen Abweichungen kann automatisch eine entsprechende Korrektur der Messdaten folgen, sodass die Zeitintervalle zwischen einer vollständigen Rekalibrierung mit erheblichem manuellem Aufwand vergrößert werden können. Dadurch werden die nutzbare Messzeit und der Durchsatz bei gleichzeitig höherer Qualität der Messergebnisse angehoben.

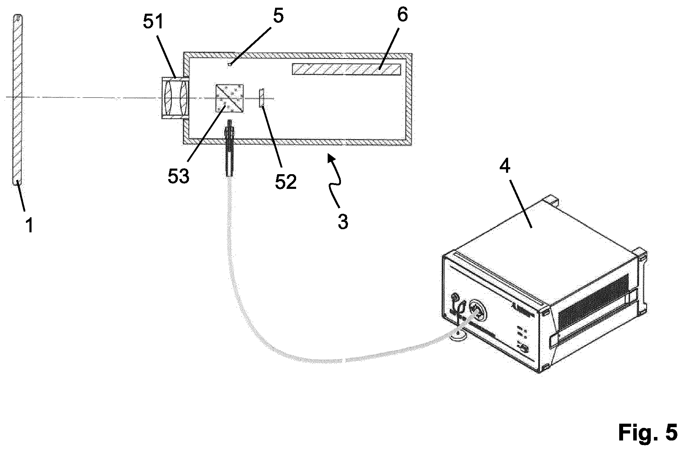

Bei der erfindungsgemäßen Ausführungsform der Figur 5 ist das Testobjekt 1 ein zum Zwecke der Qualitätssicherung (z.B. hinsichtlich der Leuchtdichte) zu vermessendes Matrix-Display, auf dem ein geeignetes Testmuster wiedergegeben wird. Das emittierte Licht des Displays wird von einem optischen System als Aufnahmeoptik empfangen, das einen Messkopf 3 umfasst, der über eine optische Faser mit einem Spektralradiometer 4 verbunden ist. Die Aufnahmeoptik umfasst außerdem ein Objektiv 51 und einen CCD-Bildsensor 52. Mittels eines Strahlteilers 53 wird ein Teil des Lichts des Displays über die optische Faser dem Spektralradiometer 4 zugeführt. In den Messkopf 3 integriert ist eine Referenzlichtquelle 5, die über eine ebenfalls integrierte Präzisionsstromquelle 6 angesteuert und mit elektrischer Energie versorgt wird. Bei der Referenzlichtquelle 5 handelt es sich zum Beispiel wiederum, wie bei der Ausführungsform der Figur 1, um eine weiße LED mit bekannten spektralen Eigenschaften, deren Licht ebenfalls über die optische Faser dem Spektralradiometers 4 zugeführt wird. Die prinzipielle Vorgehensweise bei der Überwachung der Kalibrierung des Spektralradiometers ist bei der Ausführungsform der Figur 5 wie zuvor in Bezug auf die Figuren 1 bis 4 beschrieben.

## Patentansprüche

1. Verfahren zur Überwachung eines Spektralradiometers (4), zur Vermessung von lichtaussendenden Testobjekten (1), bei dem mittels eines optischen Systems die Spektraldaten der Testobjekte (1) erfasst werden, wobei aus den Spektraldaten radio-, photo- und/oder farbmetrische Größen der Testobjekte (1) ermittelt werden, wobei durch eine in das optische System integrierte Referenzlichtquelle (5) mit bekanntem Referenzspektrum Veränderungen in der Wellenlängenskala, im Lichtdurchsatz und/oder in der spektralen Empfindlichkeit des Spektralradiometers (4) detektiert werden, wobei das Licht des Testobjektes (1) von dem optischen System als Aufnahmeoptik empfangen wird, das einen Messkopf (3) umfasst, der über eine optische Faser mit dem Spektralradiometer (4) verbunden ist, sowie ein am Messkopf (3) angeordnetes Objektiv (51) und einen im Messkopf (3) integrierten CCD-Bildsensor (52), wobei im Messkopf (3) ein Strahlteiler (53) angeordnet ist, der einen Teil des Lichts des Testobjektes (1) über die optische Verbindung dem Spektralradiometer (4) zuführt und einen Teil des Lichts des Testobjektes (1) dem CCD-Bildsensor (52) zugeführt und wobei die Referenzlichtquelle (5) in den Messkopf (3) integriert ist, mittels der anhand des bekannten Referenzspektrums eine Überwachung der Kalibrierung des Spektralradiometers (4) durchgeführt wird.

2. Verfahren nach Anspruch 1, **dadurch gekennzeichnet, dass** die Referenzlichtquelle (5) eine LED mit einer Präzisionsstromquelle (6) ist.

3. Verfahren nach Anspruch 1 oder 2, **dadurch gekennzeichnet, dass** die Referenzlichtquelle (5) derart betrieben wird, dass sie sich in einem thermodynamischen Gleichgewicht stabilisiert.

4. Verfahren nach einem der Ansprüche 1 bis 3, **dadurch gekennzeichnet, dass** die Referenzlichtquelle (5) gepulst betrieben wird.

5. Verfahren nach einem der Ansprüche 1 bis 4, **dadurch gekennzeichnet, dass** als Referenzlichtquelle (5) eine weiße LED verwendet wird.

6. Vorrichtung zur Durchführung des Verfahrens nach einem der Ansprüche 1 bis 5, mit einem Spektralradiometer (4) und einem mit diesem Spektralradiometer (4) gekoppelten optischen System als Aufnahmeoptik für von einem Testobjekt (1) kommendes Licht, wobei in die Aufnahmeoptik eine Referenzlichtquelle (5) mit bekanntem Spektrum integriert ist, wobei die Aufnahmeoptik einen Messkopf (3) umfasst, der über eine optische Faser mit dem Spektralradiometer (4) verbunden ist, sowie ein am Messkopf (3) angeordnetes Objektiv (51) und einen im Messkopf (3) integrierten CCD-Bildsensor (52), wobei im Messkopf (3) ein Strahlteiler (53) angeordnet ist, der einen Teil des Lichts des Testobjektes (1) über die optische Verbindung dem Spektralradiometer (4) zuführt und einen Teil des Lichts des Testobjektes (1) dem CCD-Bildsensor (52) zugeführt-wird, und wobei die Referenzlichtquelle (5) in den Messkopf (3) integriert ist, und wobei die Vorrichtung ein mit dem Spektralradiometer (4) kommunikativ verbundenes Computersystem aufweist, das dazu eingerichtet ist, das bekannte Spektrum und die entsprechenden Messdaten des Spektralradiometers (4) von der Referenzlichtquelle (5) zu vergleichen, um die Gültigkeit der Kalibrierung des Spektralradiometers (4) zu

7. Vorrichtung nach Anspruch 6, **dadurch gekennzeichnet, dass** die Referenzlichtquelle (5) eine LED ist.

8. Vorrichtung nach Anspruch 6 oder 7, **dadurch gekennzeichnet, dass** die Referenzlichtquelle (5) temperaturstabilisiert ist und mittels einer Präzisionsstromquelle (6) betrieben wird.

## Claims

1. Method for monitoring a spectroradiometer (4), for measuring light-emitting test objects (1), in which the spectral data of the test objects (1) are acquired by means of an optical system, wherein radiometric, photometric and/or colorimetric variables of the test objects (1) are determined from the spectral data, wherein changes in the wavelength scale, in the light throughput and/or in the spectral sensitivity of the spectroradiometer (4) are detected by a reference light source (5) with known spectrum integrated into the optical system, wherein the light of the test object (1) is received from the optical system as receiving optics, which comprises a measuring head (3), which is connected to the spectroradiometer (4) by means of an optical fiber. as well as an objective (51) arranged at the measuring head (3) and a CCD image sensor (52) integrated into the measuring head (3), wherein a beam splitter (53) is arranged into the measuring head (3), which supplies a portion of the light of the test object (1) to the spectroradiometer (4) via the optical connection and supplies a part of the light of the test object (1) to the CCD image sensor (52), and wherein the reference light source (5) is integrated into the measuring head (3), by means of which the calibration of the spectroradiometer is monitored on the basis of the known reference spectrum.

2. Method according to claim 1, **characterized in that** the reference light source (5) is an LED having a precision power source (6).

3. Method according to claim 1 or 2, **characterized in that** the reference light source (5) is operated such that it stabilizes in a thermodynamic equilibrium.

4. Method according to any one of claims 1 to 3, **characterized in that** the reference light source (5) is operated in a pulsed manner.

5. Method according to any one of claims 1 to 4, **characterized in that** a white LED is used as the reference light source (5).

6. Device for carrying out the method according to any one of claims 1 to 5, consisting of a spectroradiometer (4) and an optical system, coupled to said spectroradiometer (4) as receiving optics for light originating from a test object (1), wherein a reference light source (5) with a known spectrum is integrated into the receiving optics, wherein the receiving optics comprises a measuring head (3), which is connected to the spectroradiometer (4) by means of an optical fiber. as well as an objective (51) arranged a the measuring head (3) and a CCD image sensor (52) integrated into the measuring head (3), wherein a beam splitter (53) is arranged into the measuring head (3), which supplies a portion of the light from the test object (1) to the spectroradiometer (4) via the optical connection and supplies a portion of the light from the test object (1) to the CCD image sensor (52), and wherein the reference light source (5) is integrated into the measuring head (3), and wherein the device has a computer system connected communicatively with the spectroradiometer (4), wherein the computer system is designed to compare the known spectrum and the according measuring data of the spectroradiometer (4) from the reference light source in order to verify the validity of the calibration of the spectroradiometer (4).

7. Device according to claim 6, **characterized in that** the reference light source (5) is an LED.

8. Device according to claim 6 or 7, **characterized in that** the reference light source (5) is temperature-stabilized and is operated by means of a precision power source (6).

## Revendications

1. Procédé de surveillance d'un radiomètre spectral (4) pour mesurer des objets test (1) émettant de la lumière, dans lequel les données spectrales des objets test (1) sont enregistrées à l'aide d'un système optique, dans lequel les données spectrales permettant de déterminer des grandeurs radiométriques, photométriques et/ou colorimétriques des objets test, dans lequel par une source de lumière de référence intégrée au système optique avec un spectre de référence connu les variations de l'échelle de longueur d'onde, du débit lumineux et/ou de la sensibilité spectrale du radiomètre spectral sont détectées, dans lequel la lumière de l'objet test étant reçue par le système optique en tant qu'optique de réception, qui comprend une tête de mesure (3) reliée au radiomètre spectral (4) par une fibre optique (4), ainsi qu'un objectif (51) disposé sur la tête de mesure (3) et un capteur d'image CCD (52) intégré dans la tête de mesure (3), dans lequel un séparateur de faisceau (53) étant disposé dans la tête de mesure (3), qui achemine une partie de la lumière de l'objet testé (1) au radiomètre spectral (4) via la connexion optique et une partie de la lumière de l'objet testé (1) au capteur d'image CCD, et dans lequel la source de lumière de référence (5) étant intégrée dans la tête de mesure, à l'aide de laquelle un contrôle de l'étalonnage du radiomètre spectral (4) est effectué sur la base du spectre de référence connu.

2. Procédé selon la revendication 1, **caractérisé en ce que** la source lumineuse de référence (5) est une LED avec une source de courant de précision (6).

3. Procédé selon la revendication 1 ou 2, **caractérisé en ce que** la source lumineuse de référence (5) est exploitée de telle sorte qu'elle se stabilise dans un équilibre thermodynamique.

4. Procédé selon l'une des revendications 1 à 3, **caractérisé en ce que** la source lumineuse de référence (5) fonctionne par impulsions.

5. Procédé selon l'une des revendications 1 à 4, **caractérisé en ce qu'**une LED blanche est utilisée comme source lumineuse de référence (5).

6. Dispositif pour mettre en œuvre le procédé selon l'une des revendications 1 à 5, comprenant un radiomètre spectral (4) et un système optique couplé à ce spectroradiomètre (4) servant d'optique de réception pour la lumière provenant d'un objet test (1), une source de lumière de référence avec un spectre connu étant intégrée dans l'optique de réception, l'optique de réception comprenant une tête de mesure (3) qui est reliée au spectroradiomètre par une fibre optique (4), ainsi qu'un objectif (51) disposé sur la tête de mesure (3) et un capteur d'image CCD (52) intégré dans la tête de mesure (3), dans lequel un séparateur de faisceau (53) étant disposé dans la tête de mesure (3), qui achemine une partie de la lumière de l'objet testé (1) au radiomètre spectral (4) via la connexion optique et une partie de la lumière de l'objet testé (1) au capteur d'image CCD, et la source de lumière de référence (5) étant intégrée dans la tête de mesure (3), et le dispositif comportant un système informatique relié de manière communicative au radiomètre spectral (4), qui est conçu pour comparer le spectre connu et les données de mesure correspondantes du radiomètre spectral (4) provenant de la source de lumière de référence (5) afin de vérifier la validité de l'étalonnage du radiomètre spectral (4).

7. Dispositif selon la revendication 6, **caractérisé en ce que** la source lumineuse de référence (5) est une LED.

8. Dispositif selon la revendication 6 ou 7, **caractérisé en ce que** la source lumineuse de référence (5) est stabilisée en température et fonctionne à l'aide d'une source de courant de précision (6).
